# EUROPÄISCHE PATENTANMELDUNG

(11) **EP 3 261 205 A1**
(43) Veröffentlichungstag der Anmeldung: **27.12.2017**
(21) Anmeldenummer: 16175513.7
(22) Anmeldetag: 21.06.2016
(51) Int. Cl.: H02G 3/04, H02G 3/00

(54) **BEFESTIGUNGSVORRICHTUNG FÜR EIN KABELTRAGSYSTEM, KABELTRAGSYSTEM UND VERFAHREN ZUM INSTALLIEREN EINES KABELTRAGSYSTEMS**

(71) Anmelder: Niedax GmbH & Co. KG, 53545 Linz/Rhein (DE)
(72) Erfinder: Kloft, Martin, 53562 Hargarten (DE)
(74) Vertreter: Vossius & Partner Patentanwälte Rechtsanwälte mbB

(57) **Zusammenfassung**

Eine Befestigungsvorrichtung (10) für ein Kabeltragsystem, insbesondere zur Abhängung einer Kabelführung, weist ein Profilteil mit einer Profilbasis (13) und zwei sich von der Profilbasis (13) erstreckenden und sich gegenüberliegenden Schenkeln (11, 12) auf. Das Profilteil weist eine aufbiegbare Lasche (21) auf. Die aufbiegbare Lasche (21) ist in eine aufgebogene Konfiguration aufbiegbar, in der sich die Lasche (21) in einen Zwischenraum zwischen den Schenkeln (11, 12) erstreckt, um die Schenkel (11, 12) aneinander abzustützen.

## Beschreibung

Die vorliegende Erfindung betrifft Vorrichtungen und Verfahren zur Befestigung von Kabelführungen. Die vorliegende Erfindung betrifft insbesondere Vorrichtungen, die zur Abhängung von Kabelführungen von Decken, Wänden oder dergleichen geeignet sind.

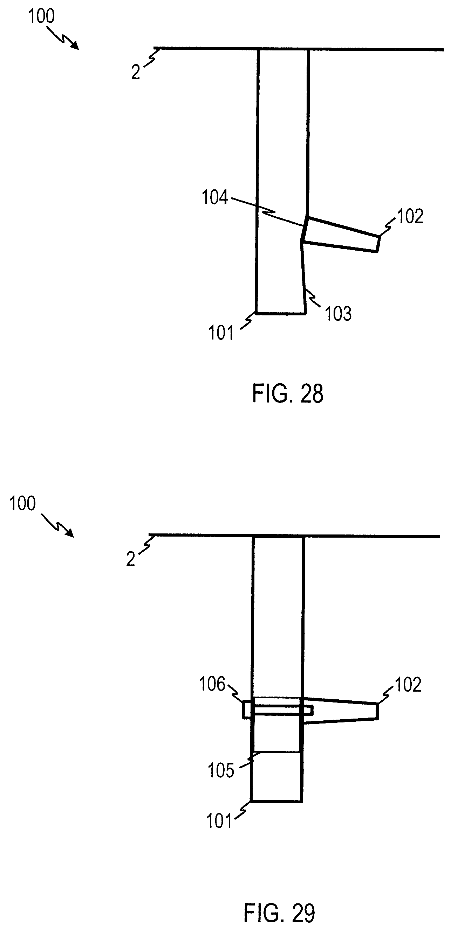

Zur Abhängung von Kabelkanälen oder anderen Kabelführungen wie Kabelrinnen von Decken oder Wänden kann ein Hängestiel verwendet werden. Ein derartiger Hängestiel kann ein Profilteil mit einem U-förmigen Querschnitt aufweisen. Das Profilteil weist zwei seitliche Schenkel auf. Der Hängestiel ist beispielsweise für eine Montage an einer Decke ausgestaltet und kann Ausnehmungen zur Befestigung von Auslegern aufweisen. Dabei kann das Problem bestehen, dass durch eine Kraft oder ein Moment, die bzw. das von einem Ausleger auf einen Schenkel des Hängestiels ausgeübt wird, der Schenkel in unerwünschter Weise plastisch verformt wird. Figur 28 zeigt schematisch ein Kabeltragsystem zur Deckenabhängung, bei dem ein Hängestiel 101 an einer Decke 2 befestigt ist. Ein Ausleger 102 übt auf einen Schenkel 103 des Profils des Hängestiels eine Kraft aus, die bewirken kann, dass der Schenkel 103 in einem Knick 104 plastisch verformt wird.

Um das Risiko einer derartigen plastischen Verformung zu verringern, kann bei der Montage ein separates Distanzstück zwischen die Schenkel des Hängestiels eingesetzt und gemeinsam mit dem Ausleger befestigt werden. Figur 29 zeigt schematisch ein Kabeltragsystem zur Deckenabhängung, bei dem ein Distanzstück 105 zwischen die Schenkel des Hängestiels 101 eingesetzt und dort mit einem Gewindebolzen 106 befestigt wird. Der Gewindebolzen 106 kann gleichzeitig auch zur Befestigung des Auslegers 102 dienen. Durch das Distanzstück 105 kann das Risiko einer signifikanten plastischen Verformung der Schenkel des Hängestiels verringert werden. Derartige Hängestiele mit separatem Distanzstück sind beispielsweise in der DE 299 07 295 U1, der DE 87 13 484 U1 und der FR 1 322 281 B1 beschrieben.

Die Befestigung eines separaten Distanzstücks bei der Montage eines Auslegers an einem Hängestiel erfordert Erfahrung und handwerkliches Geschick. Darüber hinaus besteht das Risiko, dass das Distanzstück vor der Montage unbeabsichtigt verloren geht.

Der vorliegenden Erfindung liegt die Aufgabe zu Grunde, eine verbesserte Befestigungsvorrichtung für ein Kabeltragsystem und ein verbessertes Verfahren zur Installation eines Kabeltragsystems bereitzustellen, wobei insbesondere eine gute mechanische Stabilität bei hoher Montagefreundlichkeit erreicht werden soll. Diese Aufgabe wird mit den Merkmalen der unabhängigen Ansprüche gelöst. Bevorzugte Ausführungsformen der Erfindung sind in den abhängigen Ansprüchen beschrieben.

Erfindungsgemäß wird eine Befestigungsvorrichtung für ein Kabeltragsystem bereitgestellt. Die Befestigungsvorrichtung kann beispielsweise ein Hängestiel zur Befestigung an einer Decke oder an einer Wand oder ein Ausleger für einen Hängestiel sein. Die Befestigungsvorrichtung weist eine aufbiegbare Lasche auf, die einstückig mit einem Profilteil der Befestigungsvorrichtung ausgebildet ist und als in das Profilteil integriertes Distanzstück wirken kann, um einer unerwünschten plastische Deformation einer Seitenwand der Befestigungsvorrichtung unter Belastung entgegenzuwirken. Die Lasche kann in einer Profilbasis oder einem Schenkel eines Profilteils der Befestigungsvorrichtung ausgebildet sein. Die Lasche ist in eine aufgebogene Konfiguration aufbiegbar, in der sich die Lasche in einen Zwischenraum zwischen den Schenkeln erstreckt, um die Schenkel aneinander abzustützen. Die Lasche kann durch verschiedene spanende oder nicht spanende Techniken in dem Profilteil hergestellt sein. Beispielsweise kann die Lasche als Ausstanzung, durch Laserschneiden oder durch Fräsen hergestellt sein.

Die Erfindung betrifft dementsprechend eine Befestigungsvorrichtung für ein Kabeltragsystem. Die Befestigungsvorrichtung kann insbesondere ein Hängestiel, ein Ausleger oder ein anderes Bauteil eines Abhänge-Systems zur Decken- oder WandAbhängung einer Kabelführung sein. Die Befestigungsvorrichtung weist ein Profilteil mit einer Profilbasis und zwei sich von der Profilbasis erstreckenden und sich gegenüberliegenden Schenkeln auf. Das Profilteil weist eine aufbiegbare Lasche auf, die einstückig mit dem Profilteil ausgebildet ist. Die Lasche ist in eine aufgebogene Konfiguration aufbiegbar, in der sich die Lasche in einen Zwischenraum zwischen den Schenkeln erstreckt, um die Schenkel aneinander abzustützen.

Eine derartige Befestigungsvorrichtung vereinfacht die Montage eines Kabeltragsystems, da zur Erhöhung der mechanischen Stabilität nur die Lasche aufgebogen werden muss. Die Lasche ist einstückig mit dem Profilteil der Befestigungsvorrichtung ausgestaltet, wodurch die Anzahl der bei der Montage benötigten separaten Teile im Vergleich zu einem separaten Distanzstück verringert wird. Dadurch werden logistische Vorteile, beispielsweise bei der Lagerhaltung oder Lieferung von Kabeltragsystemen und ihren Bestandteilen, sowie Kostenvorteile erzielbar. Die Montagefreundlichkeit wird erhöht.

Die aufbiegbare Lasche kann an der Profilbasis angeordnet sein. Die aufbiegbare Lasche kann aus einer mit der Profilbasis koplanaren Ausgangskonfiguration in die aufgebogene Konfiguration aufbiegbar sein. Auf diese Weise kann die aufgebogene Lasche, die in der Profilbasis durch eine Ausstanzung, Laserschneiden, Fräsen oder andere spanende oder nicht spanende Techniken gebildet sein kann, in den Zwischenraum zwischen den Schenkeln aufgebogen werden und diese, beispielsweise im Wesentlichen formschlüssig, aneinander abstützen, wenn im installierten Zustand ein Element an einem der Schenkel befestigt ist.

Die aufbiegbare Lasche kann so dimensioniert sein, dass beide Schenkel in Anlage mit der Lasche gedrückt werden, wenn ein Element an der Befestigungsvorrichtung mit einem Befestiger, beispielsweise mit einer Schraube oder einem Gewindebolzen und einer damit korrespondierenden Mutter, befestigt wird. Die Befestigungsvorrichtung kann Ausnehmungen, insbesondere Langlöcher, in beiden Schenkeln des Profilteils aufweisen, durch die die Schraube oder der Gewindebolzen durchführbar ist, um die Schenkel in Anlage mit der in die aufgebogene Konfiguration aufgebogenen Lasche zu drücken.

Die aufbiegbare Lasche kann eine Dicke aufweisen, die gleich der Dicke der Profilbasis ist. Die Dicke der aufbiegbaren Lasche kann weiterhin gleich der Dicke der Schenkel sein.

Die aufbiegbare Lasche kann um einen Steg, der die aufbiegbare Lasche mit einem der aufbiegbaren Lasche benachbarten Bereich der Profilbasis verbindet, aufbiegbar sein. Der Steg kann dimensioniert sein, um ein Aufbiegen der Lasche zu erleichtern. Dazu kann der Steg beispielsweise wenigstens eine Unterbrechung aufweisen und/oder kann eine im Vergleich zur Lasche reduzierte Dicke aufweisen und/oder kann anderweitig mechanisch geschwächt sein, um ein Aufbiegen der Lasche um den Steg zu erleichtern.

Der Steg kann sich quer zur Längsrichtung der Profilbasis über eine Länge erstrecken, die kleiner als eine Breite der Lasche in einer Richtung quer zur Längsrichtung der Profilbasis ist. Dadurch kann ein Aufbiegen der Lasche bei der Montage des Kabeltragsystems erleichtert werden.

Die Profilbasis kann mehrere Laschen aufweisen, die jeweils aufbiegbar sind. Jede der mehreren aufbiegbaren Laschen kann in die aufgebogene Konfiguration aufbiegbar sein, in der sich die entsprechende Lasche in den Zwischenraum zwischen den Schenkeln erstreckt, um die Schenkel aneinander abzustützen.

Die mehreren aufbiegbaren Laschen können entlang der Längsrichtung der Profilbasis voneinander beabstandet sein. Dabei können wenigstens zwei der aufbiegbaren Laschen einem Paar von sich gegenüberliegenden Ausnehmungen in den Schenkeln des Profilteils zugeordnet sein. Im Gebrauch können zwei Laschen aufgebogen werden, so dass ein Befestiger, mit dem ein Element an der Befestigungsvorrichtung befestigt wird, durch einen durch die aufgebogenen Laschen begrenzten Abschnitt des Zwischenraums zwischen den Schenkeln verläuft.

Jede der mehreren aufbiegbaren Laschen kann jeweils wenigstens einer von mehreren durch die Befestigungsvorrichtung definierten Befestigungsstellen zugeordnet sein, an denen ein Element, insbesondere ein Ausleger oder eine Kabelführung, an der Befestigungsvorrichtung befestigbar ist. Die Befestigungsstellen können jeweils durch Ausnehmungen, beispielsweise Löcher, in den Schenkeln des Profilteils definiert sein. Abhängig davon, an welcher der Befestigungsstellen ein Montageteil an der Befestigungsvorrichtung befestigt wird, können bei der Installation des Kabeltragsystems unterschiedliche Laschen aufgebogen werden, um die Schenkel aneinander abzustützen.

Die aufbiegbare Lasche kann an einem Ende der Profilbasis des Profilteils angeordnet sein. Die aufbiegbare Lasche kann in der nicht aufgebogenen Ausgangskonfiguration über ein Ende der Schenkel hinausragen.

Die aufbiegbare Lasche kann an einem der Schenkel des Profilteils angeordnet sein. Ein Profilteil kann sowohl eine aufbiegbare Lasche oder mehrere aufbiegbare Laschen an der Profilbasis als auch eine weitere aufbiegbare Lasche oder mehrere weitere aufbiegbare Laschen an einem Schenkel oder beiden Schenkeln des Profilteils aufweisen.

Die aufbiegbare Lasche kann so dimensioniert sein, dass die Lasche in der aufgebogenen Konfiguration eine Gegenkraft oder ein Gegenmoment auf einen Schenkel ausübt, wenn ein an dem Schenkel befestigtes Element eine Kraft oder ein Moment auf den Schenkel ausübt. Dazu kann die aufbiegbare Lasche so dimensioniert sein, dass wenigstens ein Schenkel in Anlage mit der Lasche gedrückt wird, wenn ein Element an der Befestigungsvorrichtung mit einem Befestiger, beispielsweise einer Schraube oder einem Gewindebolzen, befestigt wird. Die Lasche kann so dimensioniert sein, dass beide Schenkel des Profilteils in Anlage mit der Lasche gedrückt werden, wenn ein Element an der Befestigungsvorrichtung mit einer Schraube oder einem Gewindebolzen befestigt wird.

Die aufbiegbare Lasche kann so ausgestaltet sein, dass sie mehrfach aufbiegbar ist. Im installierten Zustand der Befestigungsvorrichtung kann die aufbiegbare Lasche mehrere gekrümmte Abschnitte aufweisen, die in dem Zwischenraum zwischen den Schenkeln angeordnet sind. Im installierten Zustand der Befestigungsvorrichtung kann die aufbiegbare Lasche mehrere voneinander beabstandete gekrümmte Abschnitte aufweisen, beispielsweise um einen Befestiger wenigstens teilweise zu umgreifen.

Die Befestigungsvorrichtung kann ein Hängestiel des Kabeltragsystems sein.

Der Hängestiel kann mehrere Ausnehmungen, insbesondere mehrere Löcher, zur Befestigung wenigstens eines Auslegers aufweisen. Die Löcher können Langlöcher sein, die einander gegenüberliegend in den Schenkeln des Profilteils angeordnet sind.

Der Hängestiel kann einen Montageabschnitt zur Montage des Hängestiels an einer Decke, einer Wand oder dergleichen aufweisen. Der Montageabschnitt kann sich quer zu einer Längsrichtung der Profilbasis erstrecken. Der Montagsabschnitt kann eine Montageplatte aufweisen. Der Montageabschnitt kann insbesondere eine an einem Ende des Hängestiels angeordnete Kopfplatte aufweisen.

Die Befestigungsvorrichtung kann ein Ausleger sein, der an einem Hängestiel befestigbar sein kann. Der Ausleger kann eine plattenförmigen Anlagefläche zur Montage an einem Hängestiel aufweisen.

Ein Kabeltragsystem nach einem Ausführungsbeispiel weist einen Hängestiel, einen an dem Hängestiel montierten Ausleger und eine an dem Ausleger montierten Kabelführung auf. Der Hängestiel und/oder der Ausleger weist ein Profilteil mit einer Profilbasis und zwei sich von der Profilbasis erstreckenden und sich gegenüberliegenden Schenkeln auf. Das Profilteil weist eine aufbiegbare Lasche auf, die einstückig mit dem Profilteil ausgebildet ist. Die Lasche ist in eine aufgebogene Konfiguration aufbiegbar, in der sich die Lasche in einen Zwischenraum zwischen den Schenkeln erstreckt, um die Schenkel aneinander abzustützen. Bei dem Kabeltragsystem können der Hängestiel und/oder der Ausleger eine Befestigungsvorrichtung nach einem Ausführungsbeispiel sein.

Ein erfindungsgemäßes Verfahren zum Installieren eines Kabeltragsystems weist die folgenden Schritte auf: Montieren einer Befestigungsvorrichtung, die ein Profilteil mit einer Profilbasis, zwei sich von der Profilbasis erstreckenden und sich gegenüberliegenden Schenkeln und einer aufbiegbaren Lasche aufweist; Aufbiegen der aufbiegbaren Lasche in eine aufgebogene Konfiguration, in der sich die aufbiegbare Lasche in einen Zwischenraum zwischen den Schenkeln erstreckt, um die Schenkel aneinander abzustützen; und Befestigen eines Elements, insbesondere eines Auslegers oder einer Kabelführung, an der Befestigungsvorrichtung.

Das erfindungsgemäße Verfahren vereinfacht die Installation des Kabeltragsystems, da zur Erhöhung der mechanischen Stabilität nur die Lasche aufgebogen werden muss. Die Lasche ist einstückig mit dem Profilteil der Befestigungsvorrichtung ausgestaltet, wodurch die Anzahl der bei der Montage benötigten separaten Teile im Vergleich zu einem separaten Distanzstück verringert wird. Dadurch werden logistische Vorteile, beispielsweise bei der Lagerhaltung oder Lieferung von Kabeltragsystemen und ihren Bestandteilen, und Kostenvorteile erzielbar. Die Montagefreundlichkeit wird erhöht.

Das Aufbiegen der Lasche kann bei dem Verfahren vor oder nach dem Montieren der Befestigungsvorrichtung, beispielsweise an einer Decke, erfolgen.

Das Aufbiegen der Lasche kann bei dem Verfahren vorteilhaft vor, aber auch nach dem Befestigen des Elements, insbesondere eines Auslegers oder einer Kabelführung, an der Befestigungsvorrichtung erfolgen.

Weitere Merkmale des Verfahrens und die damit jeweils erzielten Wirkungen entsprechen den unter Bezugnahme auf Ausführungsbeispiele der Befestigungsvorrichtung erläuterten Merkmalen.

Die bei dem Verfahren verwendete Befestigungsvorrichtung kann eine Befestigungsvorrichtung nach einem Ausführungsbeispiel sein.

Die bei dem Verfahren verwendete Befestigungsvorrichtung kann einen Hängestiel aufweisen, der bei dem Verfahren an einer Decke oder Wand montiert wird, um ein Kabeltragsystem zur Decken- oder Wandabhängung einer Kabelführung zu installieren.

Die bei dem Verfahren verwendete Befestigungsvorrichtung kann einen Ausleger umfassen, der bei dem Verfahren an einem Hängestiel montiert wird, um ein Kabeltragsystem zur Decken- oder Wandabhängung einer Kabelführung zu installieren.

Nach weiteren Ausführungsbeispielen der Erfindung wird ein Verfahren zur Herstellung einer Befestigungsvorrichtung für ein Kabeltragsystem angegeben. Das Verfahren weist die Schritte auf: Erzeugen eines Profilteils durch einen Profilbiegeschritt; und Formen einer aufbiegbaren Lasche in einer Profilbasis oder einem Schenkel des Profilteils, wobei die aufbiegbare Lasche dimensioniert ist, um in einer aufgebogenen Konfiguration die Schenkel des Profilteils aneinander abzustützen. Das Verfahren kann verwendet werden, um die Befestigungsvorrichtung nach einem Ausführungsbeispiel herzustellen.

Die aufbiegbare Lasche kann durch ein spanendes oder nicht spanendes Verfahren hergestellt werden. Die aufbiegbare Lasche kann durch Stanzen, Laserschneiden oder Fräsen erzeugt werden. Der Schritt des Formens der aufbiegbaren Lasche kann vor oder nach dem Profilbiegeschritt erfolgen.

Die Befestigungsvorrichtungen, Kabeltragsysteme und Verfahren können zur Abhängung von Kabelführungen, beispielsweise Kabelkanälen, Kabelrinnen oder dergleichen, von Decken verwendet werden, ohne darauf beschränkt zu sein.

Nachfolgend werden bevorzugte Ausführungsformen der Erfindung anhand der Zeichnungen beispielhaft beschrieben. Es zeigen:
- Figur 1: eine schematische Draufsicht eines Kabeltragsystems nach einem Ausführungsbeispiel;
- Figur 2: eine Perspektivansicht eines Hängestiels nach einem Ausführungsbeispiel;
- Figur 3: eine perspektivische Detailansicht des Hängestiels von Figur 2;
- Figur 4: eine Perspektivansicht eines Kabeltragsystems mit dem Hängestiel von Figur 2;
- Figur 5: eine weitere Perspektivansicht des Kabeltragsystems mit dem Hängestiel von Figur 2;
- Figur 6: eine Perspektivansicht eines Auslegers nach einem Ausführungsbeispiel;
- Figur 7: eine weitere Perspektivansicht des Auslegers von Figur 6;
- Figur 8: eine weitere Perspektivansicht des Auslegers von Figur 6;
- Figur 9: eine weitere Perspektivansicht des Auslegers von Figur 6;
- Figur 10: eine perspektivische Detailansicht eines Hängestiels nach einem Ausführungsbeispiel;
- Figur 11: eine weitere perspektivische Detailansicht des Hängestiels von Figur 10;
- Figur 12: eine Perspektivansicht eines Kabeltragsystems mit dem Hängestiel von Figur 10;
- Figur 13: eine weitere Perspektivansicht des Kabeltragsystems mit dem Hängestiel von Figur 10;
- Figur 14: eine perspektivische Detailansicht des Kabeltragsystems mit dem Hängestiel von Figur 10;
- Figur 15: eine Schnittansicht des Kabeltragsystems entlang einer in Figur 14 dargestellten Linie XV-XV;
- Figur 16: eine Perspektivansicht eines Hängestiels nach einem Ausführungsbeispiel;
- Figur 17: eine perspektivische Detailansicht des Hängestiels von Figur 16;
- Figur 18: eine perspektivische Detailansicht eines Hängestiels nach einem Ausführungsbeispiel;
- Figur 19: eine weitere perspektivische Detailansicht des Hängestiels von Figur 18;
- Figur 20: eine perspektivische Detailansicht eines Hängestiels nach einem Ausführungsbeispiel;
- Figur 21: eine Draufsicht des Hängestiels von Figur 20;
- Figur 22: eine Schnittansicht eines Hängestiels nach einem Ausführungsbeispiel vor einem Montieren eines Auslegers;
- Figur 23: eine Schnittansicht des Hängestiels von Figur 22 nach dem Montieren eines Auslegers;
- Figur 24: eine perspektivische Detailansicht eines Kabeltragsystems nach einem Ausführungsbeispiel;
- Figur 25: eine Schnittansicht des Kabeltragsystems nach einem Ausführungsbeispiel;
- Figur 26: eine Schnittansicht des Kabeltragsystems nach einem Ausführungsbeispiel;
- Figur 27: eine Perspektivansicht eines Kabeltragsystems mit einem Ausleger nach einem Ausführungsbeispiel;
- Figur 28: eine Draufsicht eines herkömmlichen Kabeltragsystems; und
- Figur29: eine Draufsicht eines weiteren herkömmlichen Kabeltragsystems.

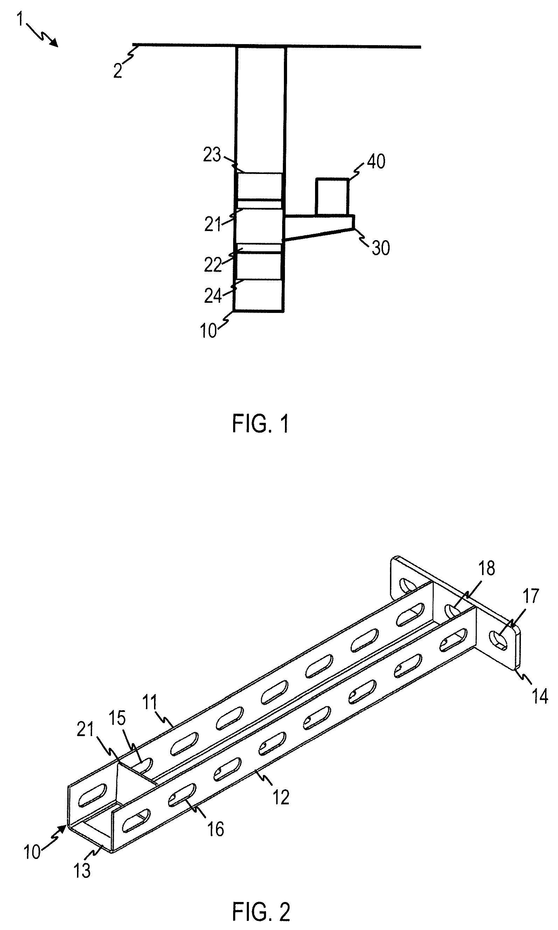

Figur 1 ist eine schematische Draufsicht eines erfindungsgemäßen Kabeltragsystems 1. Das Kabeltragsystem 1 ist zur Abhängung einer Kabelführung 40, beispielsweise eines Kabelkanals oder einer Kabelrinne, von einer Decke 2 ausgestaltet. Das Kabeltragsystem 1 weist einen Hängestiel 10 auf, der an der Decke 2 montierbar ist, so dass er sich im installierten Zustand im Wesentlichen vertikal erstreckt. Das Kabeltragsystem 1 kann einen

Ausleger 30 aufweisen, der an dem Hängestiel 10 montiert ist. An dem Ausleger 30 oder an dem Hängestiel 10 kann im installierten Zustand des Kabeltragsystems 1 die Kabelführung 40 angebracht sein.

Wie nachfolgend noch ausführlicher beschrieben wird, weist der Hängestiel 10 und/oder der Ausleger 30 ein Profilteil mit einer aufbiegbaren Lasche 21, 22 auf, die einstückig mit dem Profilteil ausgebildet ist. Die Lasche 21, 22 kann durch beliebige spanende oder nicht spanende Techniken hergestellt sein. Beispielsweise kann die Lasche 21, 22 durch Stanzen, Laserschneiden oder Fräsen hergestellt sein.

Bei der Installation des Kabeltragsystems 10 kann die aufbiegbare Lasche 21, 22 aus einer Ausgangskonfiguration, in der sie koplanar mit einer Profilbasis oder koplanar mit einem Schenkel des Profilteils ist, in eine aufgebogenen Konfiguration aufgebogen werden. In der aufgebogenen Konfiguration erstreckt sich wenigstens ein Teil der Lasche 21, 22 und bevorzugt die gesamte Lasche 21, 22 in einem Zwischenraum zwischen den Schenkeln des Profilteils, so dass im installierten Zustand des Kabeltragsystems 1 die Schenkel über die Lasche 21, 22 aneinander abgestützt sind.

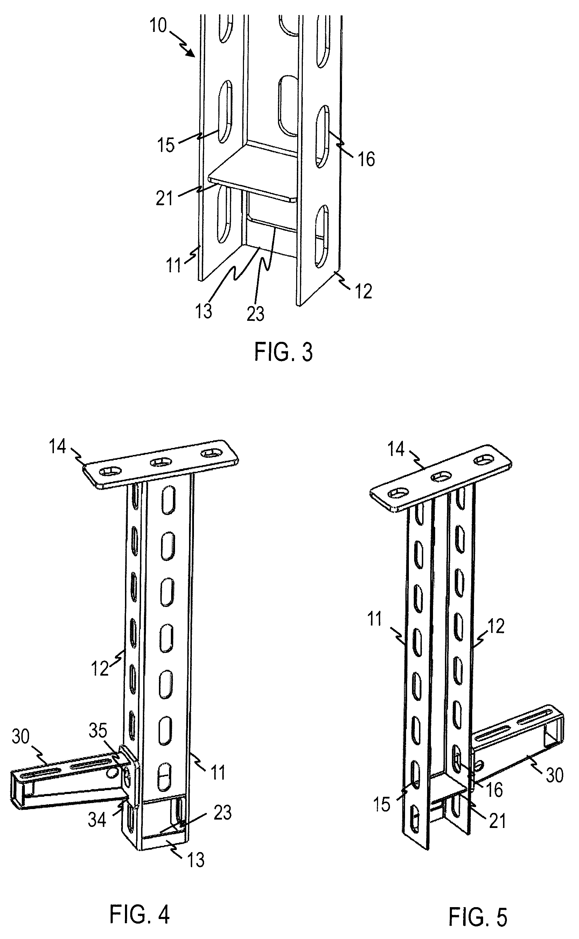

Figur 2 zeigt eine als Hängestiel 10 ausgebildete Befestigungsvorrichtung nach einem Ausführungsbeispiel. Figur 3 zeigt eine perspektivische Detailansicht des Hängestiels 10. Figur 4 und Figur 5 zeigen unterschiedliche Perspektivansichten eines Kabeltragsystems 1 mit dem Hängestiel 10.

Der Hängestiel 10 weist ein Profilteil auf, das ein U-Profilteil sein kann. Das Profilteil weist zwei sich gegenüberliegende Schenkel 11, 12 und eine Profilbasis 13 auf. Die zwei sich gegenüberliegenden Schenkel 11, 12 erstrecken sich von entgegengesetzten Seiten der Profilbasis 13 und können im Wesentlichen senkrecht von der Profilbasis 13 abstehen. Der Hängestiel 10 weist einen Montageabschnitt 14 zur Montage des Hängestiels 10 an einer Decke, einer Wand oder dergleichen auf. Der Montageabschnitt 14 kann eine Kopfplatte des Hängestiels sein. Der Montageabschnitt 14 kann mehrere Ausnehmungen 17, 18, insbesondere mehrere Löcher, aufweisen, durch die Schrauben, Gewindebolzen oder andere Befestiger zur Montage des Hängestiels 10 an der Decke 2, der Wand oder dergleichen durchführbar sind.

Die zwei sich gegenüberliegenden Schenkel 11, 12 können eine Befestigungsstelle oder mehrere Befestigungsstellen definieren, an der bzw. an denen ein Ausleger 30 an dem Hängestiel 10 befestigbar ist. Dazu können die Schenkel 11, 12 sich paarweise gegenüberliegende Ausnehmungen 15, 16 aufweisen. Die Ausnehmungen 15, 16 können jeweils Löcher, insbesondere Langlöcher, sein.

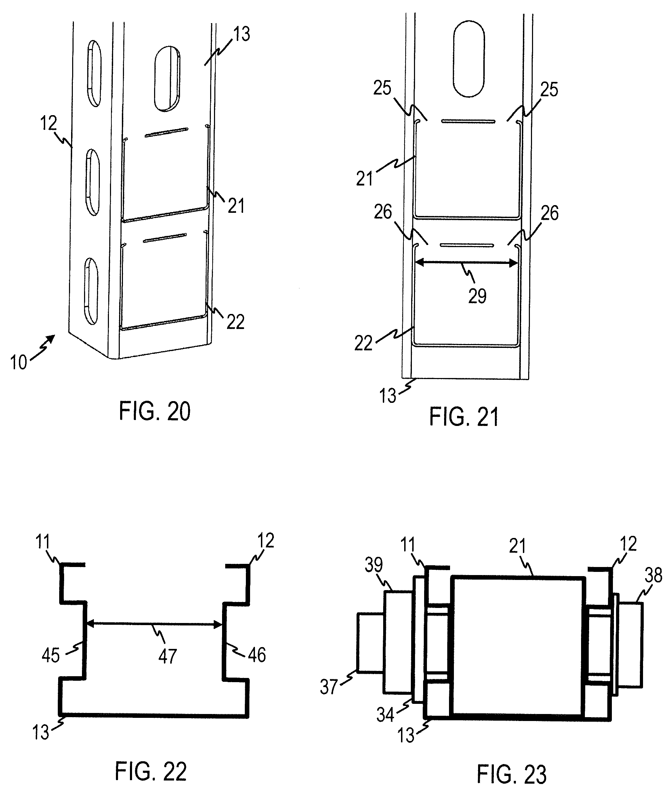

Der Hängestiel 10 weist eine einstückig mit der Profilbasis 13 ausgebildete Lasche 21 auf. Die Lasche 21 kann durch eine Ausstanzung 23 definiert sein. Die Lasche 21 kann auch anderweitig definiert sein, beispielsweise durch einen Laserschnitt oder eine Fräskante, der bzw. die die Lasche 21 wenigstens teilweise umgibt. Die Lasche 21 ist relativ zur Profilbasis 13 aufbiegbar. In einer Ausgangskonfiguration, wie sie für einen Hängestiel 10 nach einem Ausführungsbeispiel beispielhaft in Figur 20 und Figur 21 dargestellt ist, ist die Lasche 21 koplanar mit der Profilbasis 13 angeordnet. In der in Figur 2 bis Figur 4 dargestellten aufgebogenen Konfiguration ist die Lasche 21 um einen die Lasche 21 mit einem benachbarten Bereich der Profilbasis 13 verbindenden Steg so aufgebogen, dass sie von der Profilbasis 13 absteht und sich vollständig oder teilweise in den Zwischenraum zwischen den Schenkeln 11, 12 erstreckt.

Die den Schenkeln 11, 12 gegenüberliegenden seitlichen Ränder der Lasche 21 können in der aufgebogenen Konfiguration der Lasche 21 wenigstens an einem Abschnitt der Schenkel 11, 12 anliegen. Alternativ oder zusätzlich können die Schenkel 11, 12 durch einen durch die Ausnehmungen 15, 16 geführten Befestiger, beispielsweise eine Schraube oder einen Gewindebolzen mit einer Mutter zur Befestigung des Auslegers 30, in Anlage gegen die seitlichen Ränder der Lasche 21 gedrückt werden. Die Lasche 21 dient als einstückig mit der Profilbasis 13 ausgebildeter Distanzabschnitt des Profilteils und stützt im Gebrauch des Hängestiels 10 die Schenkel 11, 12 aneinander ab, wenn ein Ausleger 30 oder ein anderes Element an einem der Schenkel 11, 12 montiert ist.

Bei der Verwendung des Hängestiels 10 zur Abhängung einer Kabelführung von einer Decke 2, einer Wand oder dergleichen kann der Ausleger 30 an einem Schenkel 12 des Hängestiels 10 befestigt werden. Bei der Montage kann die Lasche 21 aus der mit der Profilbasis 13 koplanaren Ausgangskonfiguration in die aufgebogene Konfiguration aufgebogen werden. Eine Montageöffnung 35 in einer Montageplatte 34 des Auslegers 30 kann fluchtend mit den Langlöchern 15, 16 angeordnet werden. Durch eine (nicht dargestellte) Schraube oder einen (nicht dargestellten) Gewindebolzen, der durch die Montageöffnung 35 des Auslegers und beide Langlöcher 15, 16 geführt und mit einer (nicht dargestellten) Mutter an der Außenseite des entgegengesetzten Schenkels 11 gesichert wird, kann der Ausleger 30 an dem Hängestiel befestigt werden. Gleichzeitig können durch den Befestiger für den Ausleger 30 die Schenkel 11, 12 gegen die seitlichen Ränder der in die aufgebogene Konfiguration aufgebogene Lasche 21 gedrückt werden.

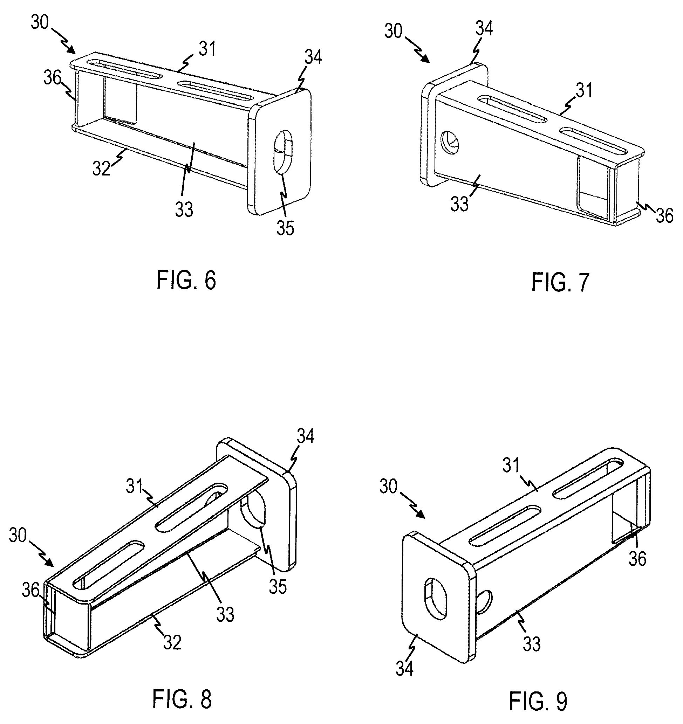

Alternativ oder zusätzlich zu einer Ausgestaltung, bei der der Hängestiel 10 ein Profilteil mit einer aufbiegbaren Lasche 21 aufweist, die beispielsweise durch eine Ausstanzung 23, einen Laserschnitt oder eine Fräskante begrenzt sein kann, kann der Ausleger 30 ein Profilteil mit einer einstückig damit ausgebildeten aufbiegbaren Lasche aufweisen, wie unter Bezugnahme auf Figur 6 bis Figur 9 ausführlicher beschrieben wird.

Figur 6 bis Figur 9 zeigen Perspektivansichten einer als Ausleger 30 ausgebildeten Befestigungsvorrichtung nach einem Ausführungsbeispiel. Der Ausleger 30 weist ein Profilteil auf, das ein U-Profilteil sein kann. Das Profilteil weist zwei sich gegenüberliegende Schenkel 31, 32 und eine Profilbasis 33 auf. Die zwei sich gegenüberliegenden Schenkel 31, 32 erstrecken sich von entgegengesetzten Seiten der Profilbasis 33 und können im Wesentlichen senkrecht von der Profilbasis 33 abstehen. Der Ausleger 30 weist eine Montageplatte 34 mit einer Montageöffnung 35 zur Montage des Auslegers 30 an einem Hängestiel 10 auf.

Wenigstens einer der Schenkel 31, 32 kann eine Befestigungsstelle oder mehrere Befestigungsstellen definieren, an der bzw. an denen beispielsweise eine Kabelführung 40 befestigbar ist und die beispielsweise durch Langlöcher definiert sein können.

Der Ausleger 30 weist eine einstückig mit der Profilbasis 33 ausgebildete Lasche 36 auf. Die Lasche 36 kann durch beliebige spanende oder nicht spanende Techniken hergestellt sein. Beispielsweise kann die Lasche 36 durch Stanzen, Laserschneiden oder Fräsen hergestellt sein.

Die Lasche 36 ist relativ zur Profilbasis 33 aufbiegbar. In einer (nicht dargestellten) Ausgangskonfiguration ist die Lasche 36 koplanar mit der Profilbasis 33 angeordnet. In der in Figur 6 bis Figur 9 dargestellten aufgebogenen Konfiguration ist die Lasche 36 um einen die Lasche 36 mit einem benachbarten Bereich der Profilbasis 33 verbindenden Steg so aufgebogen, dass sie von der Profilbasis 33 absteht und sich in den Zwischenraum zwischen den Schenkeln 31, 32 erstreckt. Die Lasche kann sich dabei an einem zu der Montageplatte 34 entgegengesetzten Ende des Auslegers 30 zwischen den Schenkeln 31, 32 erstrecken. Die den Schenkeln 31, 32 gegenüberliegenden seitlichen Ränder der Lasche 36 können in der aufgebogenen Konfiguration der Lasche 36 wenigstens an einem Abschnitt der Schenkel 31, 32 anliegen. Die Lasche 36 dient als einstückig mit der Profilbasis 33 ausgebildeter Distanzabschnitt des Profilteils, der im installierten Zustand des Auslegers 30 die Schenkel 31,32 aneinander abstützen kann.

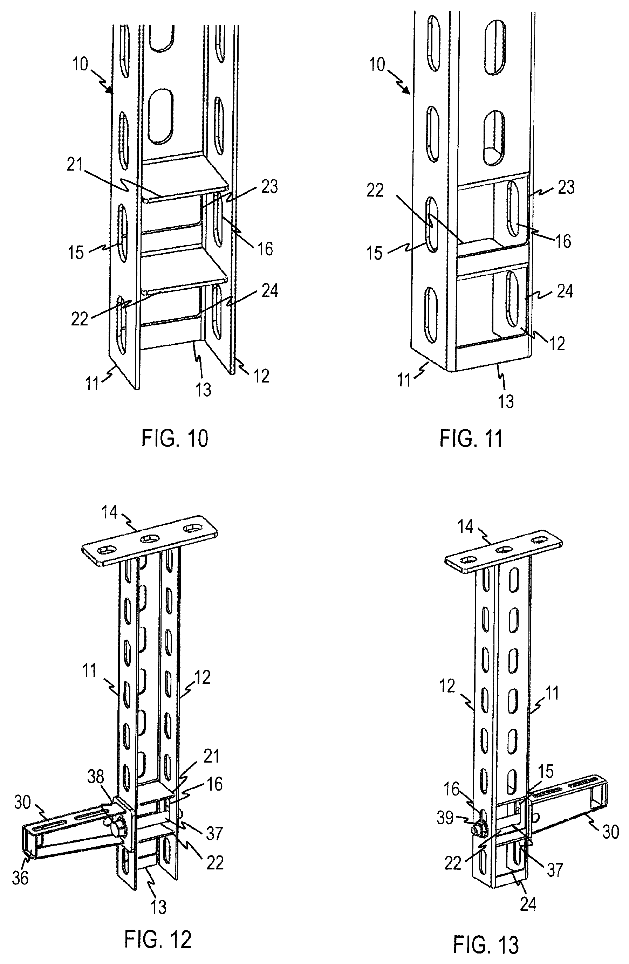

Die Befestigungsvorrichtung nach einem Ausführungsbeispiel kann auch mehrere in der Profilbasis und/oder einem Schenkel des Profilteils vorgesehene Laschen aufweisen, die einstückig mit dem Profilteil ausgebildet sind und die aufbiegbar sind, um die Schenkel im installierten Zustand der Befestigungsvorrichtung aneinander abzustützen. Dies wird unter Bezugnahme auf Figur 10 bis Figur 15 für eine als Hängestiel ausgestaltete Befestigungsvorrichtung näher erläutert.

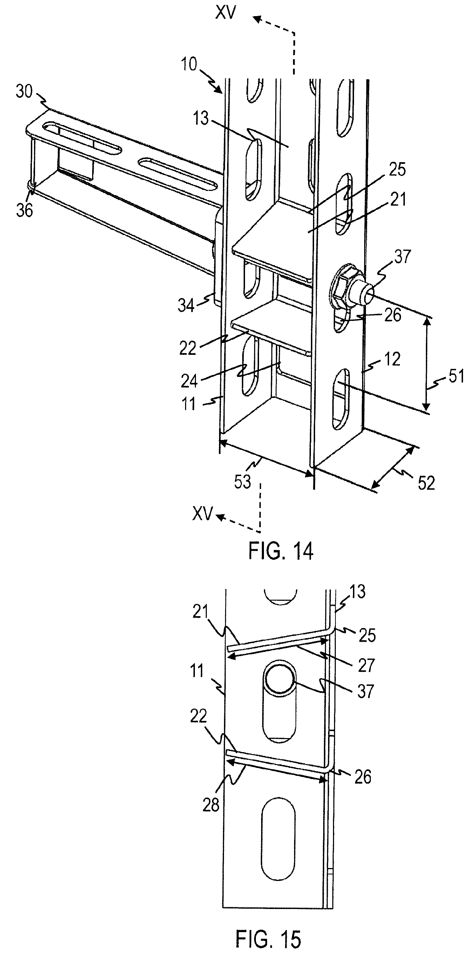

Figur 10 und Figur 11 zeigen unterschiedliche perspektivische Detailansichten einer als Hängestiel 10 ausgebildeten Befestigungsvorrichtung nach einem Ausführungsbeispiel. Figur 12 und Figur 13 zeigen unterschiedliche Perspektivansichten eines Kabeltragsystems 1 mit dem Hängestiel 10. Figur 14 zeigt eine perspektivische Detailansicht des Kabeltragsystems 1 mit dem Hängestiel 10. Figur 15 zeigt eine Schnittansicht entlang einer in Figur 14 dargestellten Linie XV-XV.

Der Hängestiel 10 weist ein Profilteil mit einer Profilbasis 13 und zwei sich von der Profilbasis 13 erstreckenden Schenkeln 11, 12 auf, die wie unter Bezugnahme auf Figur 1 bis Figur 5 beschrieben ausgestaltet sein können. Der Hängestiel 10 weist mehrere einstückig mit dem Profilteil ausgebildete aufbiegbare Laschen 21, 22 auf. Die Profilbasis 13 weist eine einstückig damit ausgebildete aufbiegbare Lasche 21 auf. Die Profilbasis 13 weist wenigstens eine weitere aufbiegbare Lasche 22 auf. Die aufbiegbare Lasche 21 und die wenigstens eine weitere aufbiegbare Lasche 22 können beispielsweise durch Stanzen, Laserschneiden oder Fräsen gebildet werden. Die aufbiegbare Lasche 21 und die wenigstens eine weitere aufbiegbare Lasche 22 können entlang einer Längsrichtung der Profilbasis 13 voneinander beabstandet sein.

Wenigstens zwei aufbiegbare Laschen 21, 22 können einer durch ein Paar von Langlöchern 15, 16 definierten Befestigungsstelle für einen Ausleger 30 zugeordnet sein. Im installierten Zustand des Hängestiels 10 können die wenigstens zwei aufbiegbaren Laschen 21, 22 derart aufgebogen werden, dass die Langlöcher 15, 16 zwischen den aufgebogenen Laschen 21, 22 angeordnet sind. Nach Montage des Auslegers 30 erstreckt sich ein Befestiger, beispielsweise eine Schraube 37 oder ein Gewindebolzen, zwischen den aufgebogenen Laschen 21, 22 durch den Zwischenraum zwischen den Schenkeln 11, 12. Die Montageplatte 34, an der ein Kopf 38 der Schraube 37 oder des Gewindebolzens anliegt, und eine Mutter 39, die an der Außenseite des gegenüberliegenden Schenkels 12 befestigt wird, können die Schenkel 11, 12 gegen die den Schenkeln 11, 12 gegenüberliegenden Seitenränder der aufgebogenen Laschen 21, 22 drücken.

Die aufbiegbare Lasche 21 ist über einen Steg 25 mit einem benachbarten Bereich der Profilbasis 13 verbunden und ist um den Steg 25 aufbiegbar. Die weitere aufbiegbare Lasche 22 ist über einen weitere Steg 26 mit einem benachbarten Bereich der Profilbasis 13 verbunden und ist um den weiteren Steg 26 aufbiegbar. Um ein Aufbiegen der Laschen 21, 22 bei der Montage des Hängestiels 10 zu erleichtern, können die Stege 25, 26 wenigstens eine Unterbrechung aufweisen. Alternativ oder zusätzlich können die Stege 25, 26 auf andere Weise, beispielsweise durch eine im Vergleich zur Dicke der Laschen 21, 22 verringerte Dicke der Stege 25, 26, so ausgestaltet sein, dass ein Aufbiegen der Laschen 21, 22 während der Montage einfach möglich ist.

Die Stege 25, 26, um die die Laschen 21, 22 aufbiegbar sind, können an denselben Seiten der aufbiegbaren Laschen 21, 22 angeordnet sein. Beispielsweise können zwei oder mehr als zwei Laschen 21, 22 jeweils um einen Steg 25, 26 aufbiegbar sein, der an dem zum Montageabschnitt 14 weisenden Ende der entsprechenden Lasche 21, 22 angeordnet ist. Alternativ können die Stege 25, 26, um die die Laschen 21, 22 aufbiegbar sind, an unterschiedlichen Seiten der aufbiegbaren Laschen 21, 22 angeordnet sein. Beispielsweise kann eine Lasche 21 um einen Steg aufbiegbar sein, der an dem zum Montageabschnitt 14 weisenden Ende der entsprechenden Lasche 21 angeordnet ist, und eine weitere Lasche 22 kann um einen weiteren Steg aufbiegbar sein, der an dem vom Montageabschnitt 14 weg weisenden Ende der entsprechenden Lasche 22 angeordnet ist. Die Stege 25, 26 können sich quer zur Längsrichtung der Profilbasis 13 erstrecken. Die Stege 25, 26 können sich dabei jeweils über die gesamte Breite der Laschen 21, 22 erstrecken oder können in der Richtung quer zur Längsrichtung der Profilbasis 13 eine Länge aufweisen, die kleiner ist als die Breite der Laschen 21, 22 in dieser Richtung.

Das Profilteil der Befestigungsvorrichtung kann eine Tiefe 52 und eine Breite 53 aufweisen. Die Befestigungsvorrichtung kann mehrere Befestigungspositionen definieren, an denen beispielsweise ein Ausleger oder ein anderes Element an der Befestigungsvorrichtung befestigbar ist. Wenigstens zwei der Befestigungspositionen, die beispielsweise durch Enden von Langlöchern definiert sind, können einen Abstand 51 voneinander aufweisen. Eine Lasche 21, 22, die der durch die Langlöcher 15, 16 definierten Befestigungsposition zugeordnet ist, kann eine Länge 27, 28 aufweisen, die gleich dem Abstand 51 oder kleiner als der Abstand 51 zwischen benachbarten Befestigungspositionen ist. Die Länge 27, 28 entspricht dabei der Abmessung der Lasche 21, 22 entlang der Längsrichtung der Profilbasis 13, wenn sich die Laschen 21, 22 in der mit der Profilbasis 13 koplanaren Ausgangskonfiguration befinden. In der aufgebogenen Konfiguration kann die Lasche 21, 22 entsprechend um die Länge 27, 28 in den Zwischenraum zwischen den Schenkeln 11, 12 hineinragen. Die Länge 27, 28 der Lasche 21, 22 kann jeweils gleich der Tiefe 52 oder größer als die Tiefe 52 des Profilteils sein. Die Breite der Lasche 21, 22 in einer Richtung quer zur Längsrichtung der Profilbasis kann so groß sein, dass die Innenseiten der Schenkel 11, 12 durch einen Befestiger für den Ausleger 30 gegen die seitlichen Ränder der Laschen 21, 22 gedrückt werden können. Derartige Abmessungen der Laschen können nicht nur vorgesehen sein, wenn die Befestigungsvorrichtung 10 wie in Figur 10 bis Figur 15 dargestellt zwei Laschen aufweist, sondern auch, wenn das Profilteil der Befestigungsvorrichtung nur eine aufbiegbare Lasche oder mehr als zwei aufbiegbare Laschen aufweist.

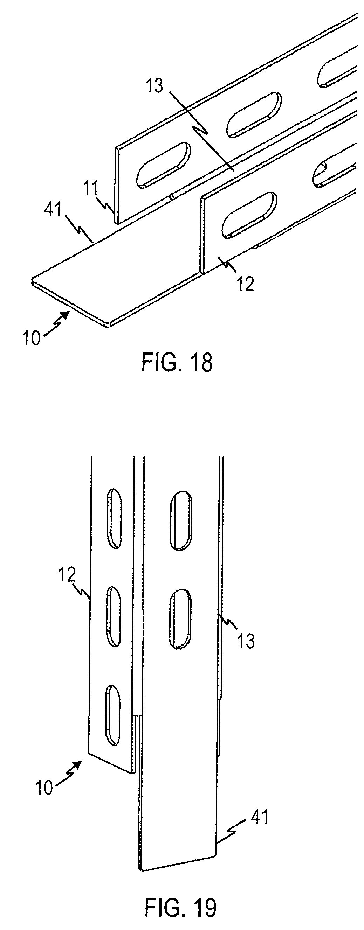

Alternativ oder zusätzlich zur Verwendung mehrerer aufbiegbarer Laschen 21, 22 kann auch eine Lasche vorgesehen sein, die so dimensioniert ist, dass sie mehrfach aufbiegbar ist, wie unter Bezugnahme auf Figur 18, Figur 19 und Figur 24 bis Figur 26 noch ausführlicher beschrieben wird.

Während unter Bezugnahme auf Figur 1 bis Figur 15 Ausführungsbeispiele beschrieben wurden, bei denen eine oder mehrere Laschen in einer Profilbasis des Profilteils definiert sind, können alternativ oder zusätzlich eine oder mehrere Laschen auch an einem Schenkel 11, 12 des Profilteils vorgesehen sein.

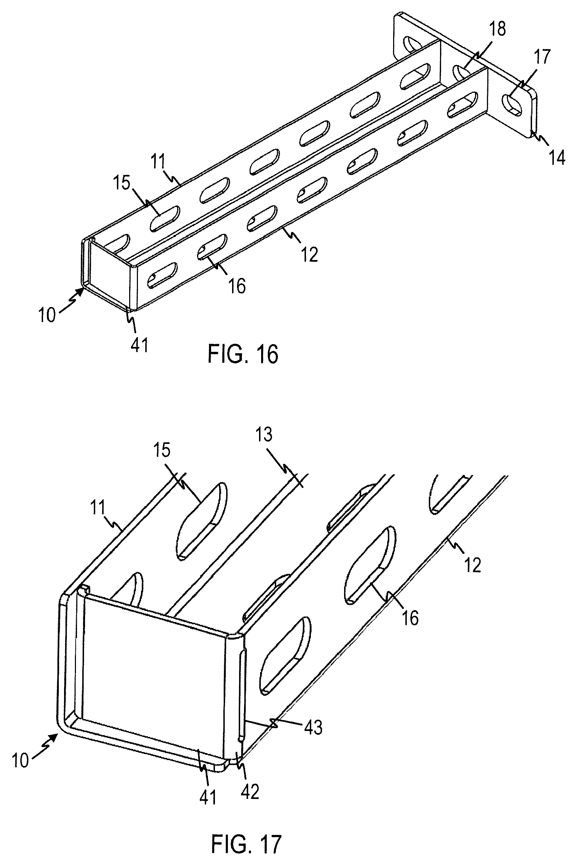

Figur 16 zeigt eine Perspektivansicht einer als Hängestiel 10 ausgebildeten Befestigungsvorrichtung nach einem Ausführungsbeispiel. Figur 17 zeigt eine perspektivische Detailansicht des Hängestiels 10. Der Hängestiel 10 weist ein U-Profilteil mit einer Profilbasis 13 und Schenkeln 11, 12 auf. Durch eine Ausnehmung 43 an einem Schenkel 12, die sich quer, insbesondere senkrecht, zu einer durch die Profilbasis 13 definierten Ebene erstreckt, kann eine Lasche 41 an dem Schenkel 12 definiert sein. Die Ausnehmung 43 kann durch Stanzen, Laserschneiden oder Fräsen oder andere spanende oder nicht spanende Techniken gebildet sein. Die Lasche 41 kann beispielsweise an einem Ende des Schenkels 12 angeordnet sein. Die Lasche 41 kann um einen Steg 42 in den Zwischenraum zwischen den Schenkeln 11, 12 aufbiegbar sein. Die Lasche 41 kann in der in Figur 16 und Figur 17 dargestellten aufgebogenen Konfiguration die Schenkel 11, 12 aneinander abstützen. Die Lasche 41 kann an einem zu dem Montageabschnitt 14 entgegengesetzten Ende des Profilteils angeordnet sein.

Figur 18 und Figur 19 zeigen unterschiedliche perspektivische Detailansichten eines Hängestiels 10 nach einem Ausführungsbeispiel. Der Hängestiel 10 weist ein U-Profilteil mit einer Profilbasis 13 und Schenkeln 11, 12 auf. Eine Lasche 41 kann an einem Ende der Profilbasis 13 definiert sein. Die Lasche 41 kann an einem zu dem Montageabschnitt 14 entgegengesetzten Ende der Profilbasis 13 angeordnet sein. Die Lasche 41 kann in den Zwischenraum zwischen den Schenkeln 11, 12 aufbiegbar sein. Die Lasche 41 kann aus der in Figur 18 und Figur 19 dargestellten Ausgangskonfiguration derart aufbiegbar sein, dass sie die Schenkel 11, 12 aneinander abstützt.

Die Lasche 41 kann um eine Länge über die von dem Montageabschnitt 14 abgewandten Enden der Schenkel 11, 12 herausragen, die gleich der Tiefe 52 des Profilteils oder größer als die Tiefe 52 des Profilteils ist. Auf diese Weise wird ein mehrfaches Aufbiegen der Lasche 41 erleichtert, so dass die Lasche 41 im installierten Zustand des Hängestiels 10 eine oder mehrere von der Ebene der Basis 13 beabstandete Krümmungen aufweisen kann.

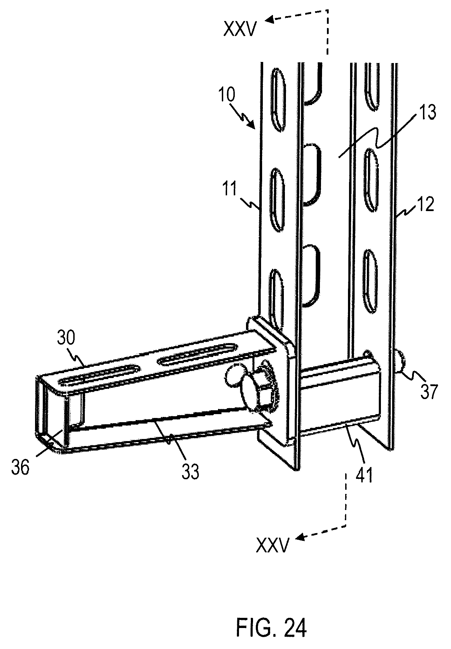

Die Lasche 41 kann in der aufgebogenen Konfiguration einen Befestiger, beispielsweise eine Schraube oder einen Bolzen, wenigstens teilweise umgeben, wie unter Bezugnahme auf Figur 24 bis Figur 26 noch ausführlicher beschrieben wird.

Bei jedem der offenbarten Ausführungsbeispiele kann sich der Steg, der eine Lasche mit dem benachbarten Bereich des Profilteils verbindet, über die gesamte Breite der Lasche erstrecken. Alternativ kann der Steg eine Länge aufweisen, die kleiner als eine Breite der Lasche ist, wie in Figur 20 und Figur 21 veranschaulicht.

Figur 20 zeigt eine perspektivische Detailansicht einer Befestigungsvorrichtung nach einem Ausführungsbeispiel, wenn sich eine oder mehrere Laschen 21, 22 in der Ausgangskonfiguration befinden, in der die Lasche(n) 21, 22 noch nicht aufgebogen ist. Figur 21 zeigt eine Draufsicht einer Profilbasis 13 der Befestigungsvorrichtung von Figur 20. Eine Lasche oder mehrere Laschen 21, 22 sind jeweils durch einen Steg 25, 26 mit einem benachbarten Bereich der Profilbasis 13 verbunden, so dass sie um den Steg 25, 26 aufbiegbar sind. Der Steg 25, 26 weist dabei eine Länge quer zur Längsrichtung der Profilbasis 13 auf, die kleiner als eine Breite 29 der Lasche(n) 21, 22 ist. In der Ausgangskonfiguration, wie sie in Figur 20 und Figur 21 dargestellt ist, kann die Lasche oder können die mehreren Laschen 21, 22, die einstückig mit der Profilbasis 13 oder einer Seitenwand 11, 12 ausgebildet sind, koplanar mit der Profilbasis 13 oder der entsprechenden Seitenwand 11, 12 sein.

Bei jedem der offenbarten Ausführungsbeispiele kann das Profilteil ein U-Profil sein. Die Schenkel des U-Profils können dabei eine Kontur aufweisen, wie anhand von Figur 22 und Figur 23 näher beschrieben wird.

Figur 22 und Figur 23 zeigen Schnittansichten eines Profilteils einer Befestigungsvorrichtung nach einem Ausführungsbeispiel in einer Ebene senkrecht zur Längsachse des Profilteils. Figur 22 zeigt das Profilteil, wenn sich eine in der Profilbasis vorgesehene Lasche 21 in einer mit der Profilbasis 13 koplanaren Ausgangskonfiguration befindet. Figur 23 zeigt das Profilteil, wenn die Schenkel zwischen einem Schraubenkopf 38 oder einem Kopf eines Gewindebolzens und einer Mutter 39 gegen die seitlichen Ränder der Lasche 21 gedrückt werden. Der erste Schenkel 11 weist einen zum zweiten Schenkel 12 hin versetzten Schenkelabschnitt 45 auf. Der zweite Schenkel 12 weist einen zum ersten Schenkel 11 hin versetzten Schenkelabschnitt 46 auf. Ein Abstand 47 zwischen den Innenseiten der Schenkelabschnitte 45, 46 ist dimensioniert, um die Lasche 21 in der aufgebogenen Konfiguration zwischen den Schenkelabschnitten 45, 46 aufzunehmen. Durch die auf die Schenkel 11, 12 von dem Schraubenkopf 38 oder dem Kopf eines Gewindebolzens und der Mutter 39 ausgeübte Kraft werden die Schenkelabschnitte 45, 46 im installierten Zustand gegen die seitlichen Ränder der Lasche 21 gedrückt. Die Lasche 21 stützt die Schenkel 11, 12 aneinander ab.

Figur 24 zeigt eine perspektivische Detailansicht eines Kabeltragsystems, das einen Hängestiel 10 und einen daran mit einem Befestiger 37 befestigten Ausleger 30 aufweist. Der Hängestiel 10 weist eine einstückig mit der Profilbasis 13 ausgebildete Lasche 41 auf. Die Lasche 41 ist aus einer Ausgangskonfiguration in eine aufgebogene Konfiguration aufbiegbar, die in Figur 24 dargestellt ist. In der aufgebogenen Konfiguration kann die Lasche 41 wenigstens einen in dem Zwischenraum zwischen den Schenkeln 11, 12 angeordneten gekrümmten Abschnitt aufweisen, der von der durch die Profilbasis 13 definierten Ebene beabstandet sein kann. Die Lasche 41 kann innerhalb des Zwischenraums zwischen den Schenkeln 11, 12 einmal oder mehrfach gebogen sein. Die Lasche 41 kann derart mehrfach gebogen sein, dass sie einen Schaft des Befestigers 37, beispielsweise den Schaft einer Schraube oder eines Gewindebolzens, wenigstens teilweise umgreift.

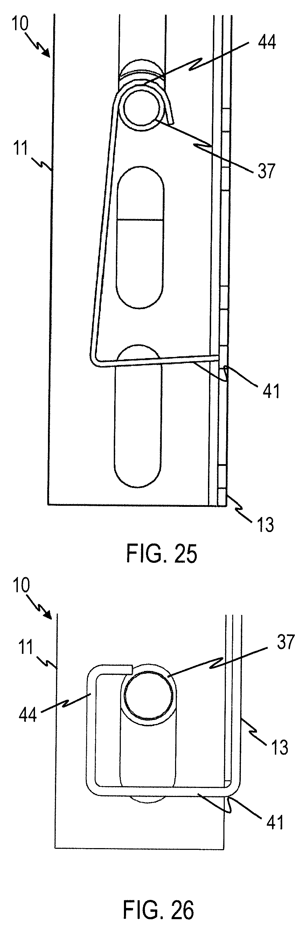

Figur 25 und Figur 26 zeigen jeweils Schnittansichten des Kabeltragsystems von Figur 24 entlang einer in Figur 24 mit XXV-XXV gekennzeichneten Linie. Die Lasche 41 kann derart aufgebogen sein, dass sie einen Schaft des Befestigers 37 wenigstens teilweise umgreift. Die Lasche 41 kann derart mehrfach aufgebogen sein, dass der Schaft des Befestigers 37 durch einen von der aufgebogenen Lasche 41 wenigstens teilweise umgebenen Bereich des Zwischenraums zwischen den Schenkeln 11, 12 durchgeführt wird. Der Lasche 41 kann im installierten Zustand des Kabeltragsystems so aufgebogen sein, dass der Befestiger 37 die aufgebogene Lasche 41 berührt. Wenigstens einer und vorteilhaft mehrere gekrümmte Bereiche der Lasche 41 in der aufgebogenen Konfiguration können von der durch die Profilbasis 13 definierten Ebene beabstandet sein.

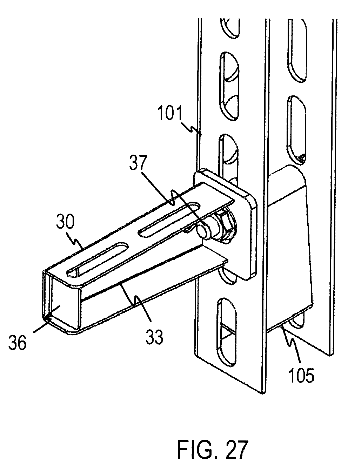

Während bei Kabeltragsystemen nach Ausführungsbeispielen sowohl ein Hängestiel als auch ein daran montierter Ausleger jeweils eine einstückig mit dem Profilteil ausgebildete, aufbiegbare Lasche aufweisen können, kann ein derartiger erfindungsgemäßer Ausleger auch mit einem herkömmlichen Hängestiel montiert werden. Ein derartiges Kabeltragsystem mit einem erfindungsgemäßen Ausleger 30 und einem herkömmlichen Hängestiel 101 ist in Figur 27 dargestellt. Dabei wird ein separates Distanzstück 105 zwischen den Schenkeln des Hängestiels 101 befestigt. Der Ausleger 30 weist eine erfindungsgemäße Ausgestaltung auf, bei der eine aufbiegbare Lasche 36 in der Profilbasis 33 gebildet ist, beispielsweise durch eine Ausstanzung. Alternativ kann auch ein herkömmlicher Ausleger in Kombination mit einem erfindungsgemäßen Hängestiel verwendet werden, der eine einstückig mit dem Profilteil ausgebildete aufbiegbare Lasche aufweist.

Während Ausführungsbeispiele unter Bezugnahme auf die Figuren beschrieben wurden, können Abwandlungen bei weiteren Ausführungsbeispielen realisiert werden. Beispielsweise kann ein Hängestiel, ein Ausleger oder eine andere Befestigungsvorrichtung für ein Kabeltragsystem eine aufbiegbare Lasche, zwei aufbiegbare Laschen oder mehr als zwei aufbiegbare Laschen aufweisen, die einstückig mit einem Profilteil ausgebildet sind und die aufbiegbar sind, um Schenkel des Profilteils im installierten Zustand der Befestigungsvorrichtung aneinander abzustützen. Die Laschen können in einer Vielzahl unterschiedlicher Anordnung an der Befestigungsvorrichtung angeordnet sein.

Während bei Ausführungsbeispielen der Hängestiel, der Ausleger oder eine andere Befestigungsvorrichtung für ein Kabeltragsystem derart verwendet werden können, dass die aufbiegbare Lasche erst bei der Montage aufgebogen wird, ist es auch möglich, die Lasche bereits werkseitig, beispielsweise vor Auslieferung, aufzubiegen.

Befestigungsvorrichtungen, Kabeltragsysteme und Verfahren nach Ausführungsbeispielen sind besonders geeignet zur Abhängung von Kabelführungen wie Kabelkanälen oder Kabelrinnen von einer Decke oder einer Wand, ohne auf diese Anwendung beschränkt zu sein.

## Patentansprüche

1. Befestigungsvorrichtung (10; 30) für ein Kabeltragsystem (1), insbesondere zur Abhängung einer Kabelführung (40), wobei die Befestigungsvorrichtung (10; 30) ein Profilteil mit einer Profilbasis (13; 33) und zwei sich von der Profilbasis (13; 33) erstreckenden und sich gegenüberliegenden Schenkeln (11, 12; 31, 32) aufweist, wobei das Profilteil eine aufbiegbare Lasche (21, 22; 36; 41) aufweist, die einstückig mit dem Profilteil ausgebildet und in eine aufgebogene Konfiguration aufbiegbar ist, in der sich die Lasche (21, 22; 36; 41) in einen Zwischenraum zwischen den Schenkeln (11, 12; 31, 32) erstreckt, um die Schenkel (11, 12; 31, 32) aneinander abzustützen.

2. Befestigungsvorrichtung (10; 30) nach Anspruch 1, wobei die aufbiegbare Lasche (21, 22; 36) an der Profilbasis (13; 33) angeordnet und aus einer mit der Profilbasis (13; 33) koplanaren Ausgangskonfiguration in die aufgebogene Konfiguration aufbiegbar ist.

3. Befestigungsvorrichtung (10; 30) nach Anspruch 2, wobei die aufbiegbare Lasche (21, 22; 36) um einen Steg (25, 26), der die aufbiegbare Lasche (21, 22; 36) mit einem zu der aufbiegbaren Lasche (21, 22; 36; 41) benachbarten Bereich der Profilbasis (13; 33) verbindet, aufbiegbar ist.

4. Befestigungsvorrichtung (10; 30) nach Anspruch 3, wobei sich der Steg (25, 26) quer zur Längsrichtung der Profilbasis (13; 33) über eine Länge erstreckt, die kleiner als eine Breite (29) der Lasche (21, 22; 36) in einer Richtung quer zur Längsrichtung der Profilbasis (13; 33) ist.

5. Befestigungsvorrichtung (10) nach einem der Ansprüche 1 bis 4, wobei die Profilbasis (13) mehrere jeweils in die aufgebogene Konfiguration aufbiegbare Laschen (21, 22) aufweist.

6. Befestigungsvorrichtung (10) nach Anspruch 5, wobei die mehreren Laschen (21, 22) entlang der Längsrichtung der Profilbasis (13; 33) voneinander beabstandet sind.

7. Befestigungsvorrichtung (10) nach Anspruch 5 oder Anspruch 6, wobei jede der mehreren Laschen (21, 22) jeweils wenigstens einer von mehreren durch die Befestigungsvorrichtung (10; 30) definierten Befestigungsstellen zugeordnet ist, an denen ein Element, insbesondere ein Ausleger (30) oder eine Kabelführung (40), an der Befestigungsvorrichtung (10) befestigbar ist.

8. Befestigungsvorrichtung (10; 30) nach einem der Ansprüche 1 bis 7, wobei die aufbiegbare Lasche (21, 22; 36; 41) dimensioniert ist, um in der aufgebogenen Konfiguration eine Gegenkraft oder ein Gegenmoment auf einen Schenkel (11, 12) auszuüben, wenn ein an dem Schenkel (11, 12) befestigtes Element (30; 40) eine Kraft oder ein Moment auf den Schenkel (11, 12) ausübt.

9. Befestigungsvorrichtung (10) nach einem der Ansprüche 1 bis 8, wobei die Befestigungsvorrichtung ein Hängestiel (10) des Kabeltragsystems (1) ist.

10. Befestigungsvorrichtung (10) nach Anspruch 9, wobei der Hängestiel (10) mehrere Ausnehmungen, insbesondere mehrere Langlöcher (15, 16), zur Befestigung wenigstens eines Auslegers (30) aufweist.

11. Befestigungsvorrichtung (30) nach einem der Ansprüche 1 bis 8, wobei die Befestigungsvorrichtung ein an einem Hängestiel (10) befestigbarer Ausleger (30) zur Befestigung einer Kabelführung (40) ist.

12. Kabeltragsystem (1) mit
einem Hängestiel (10),
einem an dem Hängestiel (10) montierten Ausleger (30) und
einer an dem Ausleger (30) montierten Kabelführung (40),
wobei der Hängestiel (10) eine Befestigungsvorrichtung nach einem der Ansprüche 9 oder 10 ist und/oder wobei der Ausleger (30) eine Befestigungsvorrichtung nach Anspruch 11 ist.

13. Verfahren zum Installieren eines Kabeltragsystems (1), aufweisend die Schritte Montieren einer Befestigungsvorrichtung (10; 30), die ein Profilteil mit einer Profilbasis (13; 33), zwei sich von der Profilbasis (13; 33) erstreckenden und sich gegenüberliegenden Schenkeln (11, 12; 31, 32) und einer aufbiegbaren Lasche (21, 22; 36; 41) aufweist,
Aufbiegen der aufbiegbaren Lasche (21, 22; 36; 41) in eine aufgebogene Konfiguration, in der sich die aufbiegbare Lasche (21, 22; 36; 41) in einen Zwischenraum zwischen den Schenkeln (11, 12; 31, 32) erstreckt, um die Schenkel (11, 12; 31, 32) aneinander abzustützen, und
Befestigen eines Elements, insbesondere eines Auslegers oder einer Kabelführung (40), an der Befestigungsvorrichtung (10; 30).

14. Verfahren nach Anspruch 13, wobei die Befestigungsvorrichtung (10; 30) eine Befestigungsvorrichtung (10; 30) nach einem der Ansprüche 1 bis 11 ist.
